# EUROPEAN PATENT APPLICATION

(11) **EP 0 893 352 A1**
(43) Date of publication of application: **27.01.1999**
(21) Application number: 98830251.9
(22) Date of filing: 27.04.1998
(51) Int. Cl.: B65B 69/00, B65G 65/23

(54) **Method and apparatus for the emptying of containers containing powder material**

(30) Priority: 08.07.1997 IT BS970060
(71) Applicant: Plasticzeta S.r.l., 25015 Desenzano del Garda (Brescia) (IT)
(72) Inventor: Zadra, Angelo, 25015 Desenzano D/Garda, Brescia (IT)
(74) Representative: Manzoni, Alessandro

(57) **Abstract**

A method and apparatus intended for the emptying of containers of powdered paint weighing on the order of 500 kg, the apparatus being mounted on a suitable frame and consisting in a conduit provided with blowing nozzle which produces aspiration of the powder combined with a blowing device intended to maintain the powder in its optimal state of powderedness.

## Description

The present invention relates to a method and apparatus intended for emptying powdered paint containers and for subsequent placement in painting machine feed equipment.

The problems of transport and withdrawal of powdered paint from the containers in which it is placed are already familiar. At present, such material is packaged essentially in two ways: either in prismatic cardboard boxes of various size and weight, or in bags of suitable material. In certain cases, the weight of these containers may reach five hundred kilograms or more, with the obvious consequences as regards their emptying for subsequent sending to the painting machine feed equipment.

There is also known a method for the emptying of containers of small size (on the order of 20-30 kilograms) which calls for the use of an aspirator pipe which is simply immersed in the powder, withdraws the powder and sends the powder to the equipment through a tube. However, this solution, if used as such, does not allow the use in containers of larger weight.

In this case, and only for bag type containers, one employs an emptying by gravity, overturning the bags and making the powder pass through vibrating containers, with the consequent problem of the impossibility of changing the color of the powder except after cleaning of the containers, which involves significant problems of maintenance and cleaning with major consequences on the operating schedule of the equipment.

The purpose of the present invention is to solve the above problem by providing both a method and apparatus intended for emptying of powdered paint containers.

The substance of the invention in question includes a housing with a support base tiltably connected to the housing between first and second positions. The support base has means for supporting a rigid sided container. A jack means is provided for moving and holding the support base at one of a plurality of positions between the first and second positions. A removal means is connected to the housing and removes the powder material from the container and thus empties the container. The removal means includes a hollow emptying pipe and an aspiration pipe, the aspiration pipe has means for injecting pressurized gas into the emptying pipe to create a vacuum in the emptying pipe. The vacuum causes the powdered material in the container to aspirate along the emptying pipe. The removal means also includes a disintegration pipe for supplying pressurized gas to an area adjacent an end of the emptying pipe in the container. The disintegration pipe includes disintegration means for using pressurized gas to disintegrate clumps of the powdered material. In operation, the method of the present invention includes inserting an end of an emptying pipe into the powdered material in the container and forcing pressurized gas into the end of the emptying pipe to aspirate the powdered material along the emptying pipe. The present invention also forces pressurized gas into an area around the end of the emptying pipe to disintegrate clumps of the powdered material.

The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

In the drawings:
- Fig. 1: is a schematic view of the entire apparatus for emptying a prismatic container;
- Fig. 2: is detailed view of the device for removing the powder; and
- Fig. 3: is a view of the apparatus of Fig. 1, in the process of emptying a bag of powder.

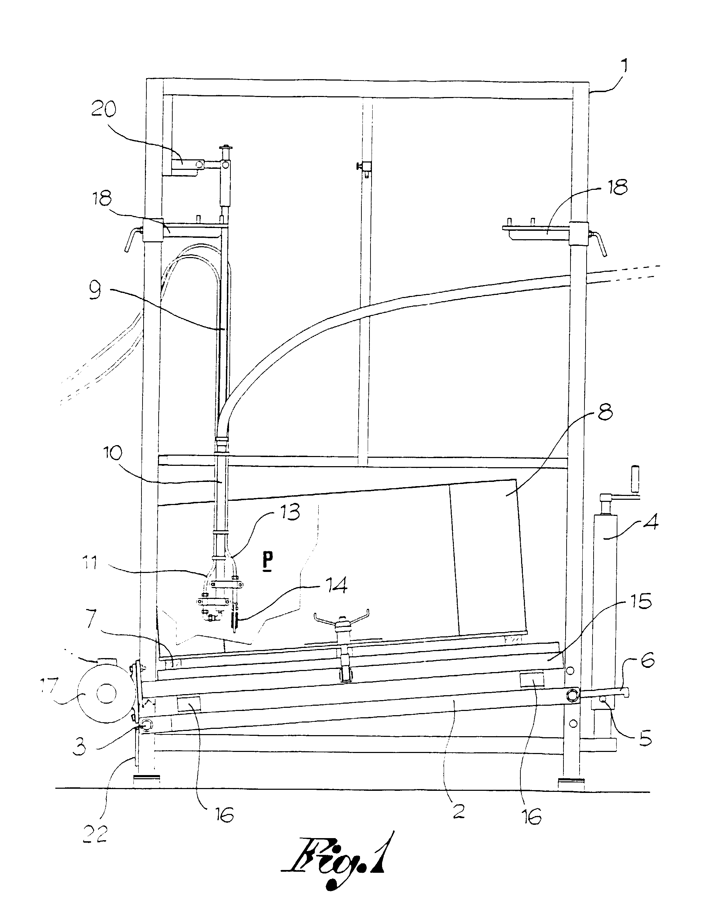

Referring to the drawings, and in particular to Figure 1, a supporting structure 1 includes a frame defined by the sides of an ideal parallelepiped. The structure is provided with a support base 2, pivoting at 3 and capable of tilting by means of a jack 4, provided with pins 5 to support appendices 6 integrated in the base 2.

As illustrated in Fig. 1, on the base 2 and, more precisely, on the plane 15, is placed a bed 7, on which is loaded a prismatic container 8 which, in the fashion of the jack 4, is inclined in order to encourage the powder present in the container to flow toward the bottom.

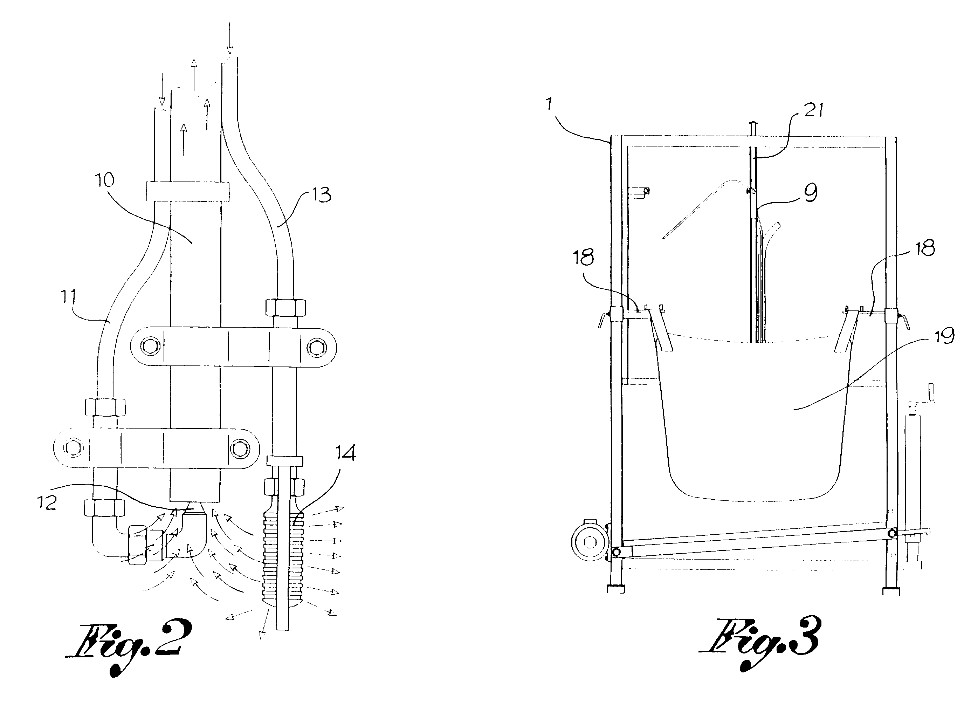

Through an opening in the container 8 there is introduced into the powder P present therein, a removal device or means 9 comprised, as shown in Fig. 2, of a hollow emptying pipe 10, adequately secured at 20 to the housing 1. To the emptying pipe 10 is appropriately connected an air supply tube or aspiration pipe 11 coming from suitable equipment. The tube 11 terminates in a nozzle 12 placed at the base of the pipe 10. Similarly, to the same pipe 10 is fastened another air conduit or disintegration pipe 13, whose terminal part 14 presents a blowing device intended to continuously displace the powder and maintain it in the optimal condition, i.e., devoid of any clumps or granules which prevent its proper removal.

The tube 11 in combination with the nozzle 12 comprises a blowing device, such as produces the aspiration and the exit by vacuum of the powder through the pipe 10 and, from here, to a centrifuging cyclone (not shown), and then flowing to the feed equipment of the painting machine.

Advantageously, on the tiltable base 2 there is appropriately arranged shock absorbing pad means 16 for separating the base 2 from the support plane 15 of the container 8. Laterally on the housing 1, at the level of the base 2, and at the plane 15, there is attached a vibrating device 17, whose purpose is to maintain the mass of powder present in the container moving during its withdrawal, in order to make it flow toward the particular zone of the device 9.

The same methodology and same device can be used in the case of powder contained in bags.

With respect to Fig. 3, the housing 1 has hooks 18 capable of various positioning and being fixed to the housing. The hooks acting as supports for a bag 19. In this case, the device 9 is attached to the housing 1 at 21, so that it is essentially at the center of the bag 19. As provided in the case of the prismatic container, the vibrator 17 is attached to the housing on a sheet 22 integrated with the entire housing 1 in order to maintain the powder moving toward the center of the bottom of the bag.

The above description shows the new and original solution to the problem of emptying containers of powder varnish of large size, eliminating the inconveniences which presently exist.

While specific embodiments of the invention have been shown and described in detail to illustrate the application of the principles of the invention, it will be understood that the invention may be embodied otherwise without departing from such principles.

## Claims

1. An apparatus for emptying a container of powdered material, the apparatus comprising;
a housing;
a support base tiltably connected to said housing between first and second positions, said support base having means for supporting a rigid sided container;
jack means for moving and holding said support base at one of a plurality of positions between said first and second positions.

2. An apparatus in accordance with claim 1, further comprising:
a plane on said support base and between said container and said support base;
shock absorbing pad means spacing said base from said plane and for absorbing shocks.

3. An apparatus in accordance with claim 1, further comprising:
removal means connected to said housing and for removing the powder material from said container and for emptying said container.

4. An apparatus in accordance with claim 3, wherein:
said removal means includes a hollow emptying pipe and an aspiration pipe, said aspiration pipe having means for injecting pressurized gas into said emptying pipe to create a vacuum in said emptying pipe, said vacuum causing the powdered material in said container to aspirate along said emptying pipe.

5. An apparatus in accordance with claim 3, wherein:
said removal means includes a disintegration pipe for supplying pressurized gas to an area adjacent an end of said emptying pipe in said container, said disintegration pipe including disintegration means for using pressurized gas to disintegrate clumps of the powdered material.

6. An apparatus in accordance with claim 4, wherein:
said removal means includes a disintegration pipe for supplying pressurized gas to an area adjacent an end of said emptying pipe in said container, said disintegration pipe including disintegration means for using pressurized gas to disintegrate clumps of the powdered material.

7. An apparatus in accordance with claim 2, further comprising:
removal means connected to said housing and for removing the powder material from said container from a zone of action of said removal means and for emptying said container;
vibrator means connected to said base and said plane for moving the powder toward a zone of action of said removal means.

8. An apparatus in accordance with claim 1, wherein:
said housing includes hook means adjustably connected in height to said housing and for supporting said container in a form of a bag.

9. An apparatus in accordance with claim 8, further comprising:
removal means connected to said housing and for removing the powder material from said container and for emptying said container, said removal means being positioned opposite a center of a bottom of said bag.

10. An apparatus in accordance with claim 9, further comprising:
vibrator means connected to a housing integrated with said housing for moving the powder toward said center of said bag.

11. An apparatus in accordance with claim 1, wherein:
said housing includes sides formed as an ideal parallelpiped;
said container is a prismatic cardboard container;
said powdered material is powdered paint.

12. A method for removing powdered material from a container, the method comprising the steps of:
inserting an end of an emptying pipe into the powdered material in said container;
forcing pressurized gas into said end of said emptying pipe to aspirate the powdered material along said emptying pipe.

13. A method in accordance with claim 12, further comprising:
forcing pressurized gas into an area around said end of said emptying pipe to disintegrate clumps of the powdered material.
